# EUROPEAN PATENT APPLICATION

(11) **EP 1 486 949 A1**
(43) Date of publication of application: **15.12.2004**
(21) Application number: 03744531.9
(22) Date of filing: 19.03.2003
(51) Int. Cl.: G10L 15/00, H04N 5/278, G06F 17/28

(54) **AUDIO VIDEO CONVERSION APPARATUS AND METHOD, AND AUDIO VIDEO CONVERSION PROGRAM**

(30) Priority: 20.03.2002 JP 2002077773; 13.03.2003 JP 2003068440
(71) Applicant: Japan Science and Technology Agency, Kawaguchi-shi, Saitama 332-0012 (JP); B.U.G. Inc., Atsubetsu-ku, Sapporo-shi, Hokkaido 004-0015 (JP); Ifukube, Tohru, Tokyo 168-0063 (JP)
(72) Inventor: IFUKUBE, Tohru, Suginami-ku, Tokyo 168-0063 (JP)
(74) Representative: Vinsome, Rex Martin
(86) International application number: PCT/JP2003/003305
(87) International publication number: WO 2003/079328

(57) **Abstract**

Speech of a speaker is repeated by a repeating person whose speech is recognized and a video of the speaker is delayed when displayed so that it is displayed together with characters, so that the speech of the speaker can easily be understood. A video delay unit (2) outputs delayed video data of video input to a camera (1) and delayed. A first speech recognition unit (5) recognizes the content of a first language of a first repeating person input to a first speech input unit (3) and converts it into visible language data. A second speech recognition unit (6) recognizes the content of a second language of a second repeating person input to a second speech input unit (4) and converts it into second visible language data. A layout setting unit (8) receives the first and the second language data from the first and the second speech recognition unit (5,6) and delayed video data from the video delay unit (2), sets a display layout of these data, creates a display video, and displays it on a character video display unit (9).

## Description

### Technical Field

The present invention relates to audio video conversion apparatuses, audio video conversion methods, and audio video conversion programs.

### Background of the Invention

Conventionally, closed captioning, condensed transcription, and other assistive technologies and services have been used to make it possible for hearing-impaired people to take part in conferences.

The current computer-based speech recognition technology requires the user to read out some words and phrases loudly and to enter the characteristics of the user's speech in a dictionary of speech recognition equipment in advance. The highest recognition rate of the equipment storing speeches made by the speaker does not exceed 95% even if topics are limited.

The present inventor has not been reported that the re is any paper or any material that shows similarity to the present invention, but knows the following applications: Japan Broadcasting Corporation (NHK) has adopted a speech recognition method requiring the intervention of a repeating person, when adding captions to a television program; According to a press release (dated January 20, 2003) of Daikin Industries, Ltd., it has released Mospy, non-linear transcribing software by means of speech recognition. This software can compile text from speech included in a video clip by repeating play-pause sequences and by utilizing speech recognition equipment.

### Summary of the Invention

The conventional captioning and transcription services have not become widely available because of such big barriers that the y are not multilingual; some experience is required to create captions and transcriptions; and the re is not enough skilled labor.

Generally, at the current level of the speech recognition technology, speeches made by an arbitrary speaker are recognized with a very low accuracy. The technology might be useless in a noisy environment. A general speech recognition time is about one second, and speech recognition through an interpreter would require extra two or three seconds. Text obtained through speech recognition lags behind facial expressions of the speaker and the like, so that visual data such as the movement of the lips and facial expressions of the speaker and sign language cannot be used to understand the context. For instance, Japanese includes many Chinese characters (kanji) that are the same in sound and different in meaning (homonymy). If a right meaning cannot be guessed from the context, a wrong conversion could occur. At the current technology level, it is hard to understand the context automatically, and the user of the speech recognition equipment should select kanji. Another problem of the current speech recognition technology is that the recognition rate decreases immediately after the speaker or the topic changes. The speech recognition equipment must be used in a quiet environment with a special microphone held in a predetermined position near the mouth of the speaker.

It has been difficult to use the conventional speech recognition equipment as an aid to interpreters or hearing-impaired people in conferences.

NHK's speech recognition system and the product developed by Daikin do not use the Internet or another electric communication circuit, so that a remote user aid service utilizing an interpreter or a repeating person working at home or at a remote place cannot be provided.

The foregoing points have been considered, and the present invention has an object to provide such an audio video conversion apparatus, an audio video conversion method, and an audio video conversion program that a repeating person repeats speeches made by an arbitrary speaker; a speech recognition unit converts the speeches into text; and the speaker's picture showing his or her facial expressions and the like is displayed on a screen or the like after a certain delay, together with the corresponding text; in order to help hearing-impaired people and others understand the speeches made by the speaker.

The present invention also has an object to provide such an audio video conversion apparatus, an audio video conversion method, and an audio video conversion program that a repeating person repeats speeches made by a lecturer or an interpreter; a speech recognition unit converts the speeches into text; and the text is displayed on a screen together with the corresponding picture of the lecturer; as an assistive means for hearing-impaired people attending in international conferences, multilateral or bilateral conferences, and other meetings.

Another object of the present invention is to interpret international conferences where different languages are used, to print the contents of those conferences immediately (compensation for information), to aid hearing-impaired people and others in conferences or lectures, and to provide textual information to the user after transferring speeches to a repeating person by telephone. The present invention further has an object to provide an audio video conversion apparatus, an audio video conversion method, and an audio video conversion program that helps the user communicate with a speaker across the border between different linguistic systems.

A further object of the present invention is to make the system described above available to the user wherever he or she is, by adding a means for transferring the speeches and picture of the speaker to an interpreter, a repeating person, or a correcting person working at home or at a remote place, by means of an electric communication circuit which performs communication through an electric communication channel such as the Internet. The present invention also has an object to provide a system with which a repeating person and an interpreter can conduct home-based business and an impaired person who is hard to go out from home can work as a repeating person at home.

According to a first solving means of the present invention, an audio video conversion apparatus is provided which includes:
a camera for taking a picture of facial expressions of a speaker;
a video delay block for delaying a video signal of the picture taken by the camera, by a predetermined delay time and for outputting delayed video data;
a first speech input block for receiving speeches made in a first language by a first repeating person who repeats speeches made in the first language by the speaker;
a second speech input block for receiving speeches made in a second language by a second repeating person who repeats speeches made in the second language by an interpreter who interprets the speeches made in the first language by the speaker;
a first speech recognition block for recognizing and converting the speeches made in the first language sent from the first speech input block, into first visible language data, and for outputting the data; and a second speech recognition block for recognizing and converting the speeches made in the second language sent from the second speech input block, into second visible language data, and for outputting the data;
a layout block for receiving the first visible language data output from the first speech recognition block, the second visible language data output from the second speech recognition block, and the delayed video data of the speaker delayed by the video delay block, for determining a display state, and for generating an image to be displayed in which those data have been synchronized or approximately synchronized;
a text and video display block for displaying the image to be displayed in which the first visible language data, the second visible language data, and the delayed video data have been synchronized or approximately synchronized, in accordance with the output from the layout block;
an input block for setting up one or more of the first speech recognition block, the second speech recognition block, the video delay block, and the layout block; and
a processor for controlling the first speech recognition block, the second speech recognition block, the video delay block, the input block, and the layout block.

According to a second solving means of the present invention, an audio video conversion apparatus is provided which includes:
a camera for taking a picture of facial expressions of a speaker;
a video delay block for delaying a video signal of the picture taken by the camera, by a predetermined delay time and for outputting delayed video data;
a first speech input block for receiving speeches made in a first language by a first repeating person who repeats speeches made in the first language by the speaker or an interpreter;
a first speech recognition block for recognizing and converting the speeches made in the first language, sent from the first speech input block, into first visible language data, and for outputting the data;
a layout block for receiving the first visible language data output from the first speech recognition block, and the delayed video data of the speaker delayed by the video delay block, for determining a display state, and for generating an image to be displayed in which those data have been synchronized or approximately synchronized;
a text and video display block for displaying the image to be displayed in which the first visible language data and the delayed video data have been synchronized or approximately synchronized, in accordance with the output from the layout block;
an input block for setting up one or more of the first speech recognition block, the video delay block, and the layout block; and
a processor for controlling the first speech recognition block, the video delay block, the input block, and the layout block.

According to a third solving means of the present invention, there is provided an audio video conversion method and program for converting speeches made by a speaker into visible language data and displaying the language data together with image data of the speaker, and the audio video conversion method and program comprising:
a step in which a processor sets up a first speech recognition block, a second speech recognition block, and a video delay block, as instructed by an input block or as predetermined in an appropriate storage block;
a step in which the processor sets up a layout block, as instructed by the input block or as predetermined in an appropriate storage block;
a step in which a camera takes a picture of the speaker;
a step in which the video delay block delays the picture taken by the camera and performs, if necessary, appropriate image processing, and outputs delayed video data, as specified and controlled by the processor;
a step in which a first speech input block receives speeches made in a first language by a first repeating person who repeats speeches made in the first language by the speaker;
a step in which the first speech recognition block recognizes the speeches made in the first language by the first repeating person, received by the first speech input block, and converts the speeches into first visible language data;
a step in which a second speech input block receives speeches made in a second language by a second repeating person who repeats speeches made in the second language by an interpreter who interprets the speeches made in the first language by the speaker;
a step in which the second speech recognition block recognizes the speeches made in the second language by the second repeating person, received by the second speech input block, and converts the speeches into second visible language data;
a step in which the layout block receives the first language data from the first speech recognition block, the second language data from the second speech recognition block, and the delayed video data from the video delay block, determines a display layout of those data, generates an image to be displayed in which those data have been synchronized or approximately synchronized by image processing, and outputs the image, as specified and controlled by the processor; and
a step in which a text and video display block displays the image to be displayed in which the first language data, the second language data, and the delayed video data have been synchronized or approximately synchronized, in accordance with the output from the layout block.

According to a forth solving means of the present invention, there is provided an audio video conversion method and program for converting speeches made by a speaker into visible language data and displaying the language data together with image data of the speaker, and the audio video conversion method and program comprising:
a step in which a processor sets up a first speech recognition block and a video delay block, as instructed by an input block or as predetermined in an appropriate storage block;
a step in which the processor sets up a layout block, as instructed by the input block or as predetermined in an appropriate storage block;
a step in which a camera takes a picture of the speaker;
a step in which the video delay block delays the picture taken by the camera and performs, if necessary, appropriate image processing, and outputs delayed video data, as specified and controlled by the processor;
a step in which a first speech input block receives speeches made in a first language by a first repeating person who repeats speeches made in the first language by the speaker or an interpreter;
a step in which the first speech recognition block recognizes the speeches made in the first language by the first repeating person, received by the first speech input block, and converts the speeches into first visible language data;
a step in which the layout block receives the first language data from the first speech recognition block and the delayed video data from the video delay block, determines a display layout of those data, generates an image to be displayed in which those data have been synchronized or approximately synchronized by image processing, and outputs the image, as specified and controlled by the processor; and
a step in which a text and video display block displays the image to be displayed in which the first language data and the delayed video data have been synchronized or approximately synchronized, in accordance with the output from the layout block.

According to a fifth solving means of the present invention, an audio video conversion apparatus is provided which includes:
a first recognition unit comprising a first speech recognition block for recognizing speeches made in a first language by a first repeating person who repeats speeches made in the first language by a speaker and converting the speeches into first visible language data; a first input block for setting up the first speech recognition block; and a first processor for controlling the first speech recognition block and the first input block;
a second recognition unit comprising a second speech recognition block for recognizing speeches made in a second language by a second repeating person who repeats speeches made in the second language by an interpreter who interprets the speeches made in the first language by the speaker, and converting the speeches into second visible language data; a second input block for setting up the second speech recognition block; and a second processor for controlling the second speech recognition block and the second input block; and
a display unit for receiving outputs from the first recognition unit and the second recognition unit, and displaying text and an image,
the display unit comprising:
   a video delay block for delaying the signal of a picture taken by a camera by a predetermined delay time and outputting delayed video data;
   a layout block for receiving the first visible language data from the first recognition unit, the second visible language data from the second recognition unit, and the delayed video data of the speaker delayed by the video delay block, determining a display state, and generating an image to be displayed in which those data have been synchronized or approximately synchronized;
   a text and video display block for displaying the image to be displayed, output from the layout block;
   a third input block for setting up the video delay block and the layout block; and
   a third processor for controlling the video delay block, the third input block, and the layout block.

According to a sixth solving means of the present invention, an audio video conversion apparatus is provided which includes:
a first recognition unit comprising a first speech recognition block for recognizing speeches made in a first language by a first repeating person who repeats speeches made in the first language by a speaker or an interpreter, and converting the speeches into first visible language data; a first input block for setting up the first speech recognition block; and a first processor for controlling the first speech recognition block and the first input block; and
a display unit for receiving an output from the first recognition unit and displaying text and an image,
the display unit comprising:
   a video delay block for delaying the signal of a picture taken by a camera by a predetermined delay time, and outputting delayed video data;
   a layout block for receiving the first visible language data from the first recognition unit and the delayed video data of the speaker delayed by the video delay block, determining a display state, and generating an image to be displayed in which those data have been synchronized or approximately synchronized;
   a text and video display block for displaying the image to be displayed, output from the layout block;
   a third input block for setting up the video delay block and the layout block; and
   a third processor for controlling the video delay block, the third input block, and the layout block.

According to a seventh solving means of the present invention, there is provided an audio video conversion method for converting speeches made by a speaker into visible language data and displaying the language data together with image data of the speaker, and the audio video conversion method comprising:
a step in which a first processor, a second processor, and a third processor set up a first recognition block, a second recognition block, and a video delay block, as instructed by a first input block, a second input block, and a third input block respectively or as predetermined in an appropriate storage block;
a step in which the third processor sets up a layout block, as instructed by the third input block or as predetermined in an appropriate storage block;
a step in which the video delay block delays a picture of the speaker taken by a camera and performs, if necessary, appropriate image processing, and outputs delayed video data, as specified and controlled by the third processor;
a step in which the first speech recognition block recognizes speeches made in a first language by a first repeating person who repeats speeches made in the first language by the speaker, and converts the speeches into first visible language data;
a step in which the second speech recognition block recognizes speeches made in a second language by a second repeating person who repeats speeches made in the second language by an interpreter who interprets the speeches made in the first language by the speaker, and converts the speeches into second visible language data;
a step in which the layout block receives the first visible language data from the first speech recognition block, the second visible language data from the second speech recognition block, and the delayed video data from the video delay block, determines a display layout of those data, generates an image to be displayed in which those data have been synchronized or approximately synchronized by image processing, and outputs the image, as specified and controlled by the third processor; and
a step in which a text and video display block displays the image to be displayed in which the first visible language data, the second visible language data, and the delayed video data have been synchronized or approximately synchronized, in accordance with the output from the layout block.

According to a eighth solving means of the present invention, there is provided an audio video conversion method for converting speeches made by a speaker into visible language data and displaying the language data together with image data of the speaker, and the audio video conversion method comprising:
a step in which a first processor and a third processor set up a first speech recognition block and a video delay block, as instructed by a first input block and a third input block respectively or as predetermined in an appropriate storage block;
a step in which the third processor sets up a layout block, as instructed by the third input block or as predetermined in an appropriate storage block;
a step in which the video delay block delays a picture of the speaker taken by a camera and performs, if necessary, image processing, and outputs delayed video data, as specified and controlled by the third processor;
a step in which the first speech recognition block recognizes speeches made in a first language by a first repeating person who repeats the speeches made in the first language by the speaker or an interpreter, and converts the speeches into first visible language data;
a step in which the layout block receives the first language data from the first speech recognition block and the delayed video data from the video delay block, determines a display layout of those data, generates an image to be displayed in which those data have been synchronized or approximately synchronized by image processing, and outputs the image, as specified and controlled by the third processor; and
a step in which a text and video display block displays the image to be displayed in which the first visible language data and the delayed video data have been synchronized or approximately synchronized, in accordance with the output from the layout block.

### Brief Description of the Drawings

Fig. 1 is a schematic block diagram showing the configuration of an audio video conversion apparatus according to a first embodiment.
Fig. 2 is a flowchart of speech conversion performed by a processor in the first embodiment.
Fig. 3 is a schematic block diagram showing the configuration of an audio video conversion apparatus according to a second embodiment.
Fig. 4 is a flowchart of speech conversion performed by a processor in the second embodiment.
Fig. 5 is a schematic block diagram showing the configuration of an audio video conversion apparatus according to a third embodiment.
Fig. 6 is a schematic block diagram showing the configuration of an audio video conversion apparatus according to a fourth embodiment.

### Description of the Preferred Embodiments

Embodiments of the present invention will be described below in detail with reference to the drawings.

### 1. First embodiment

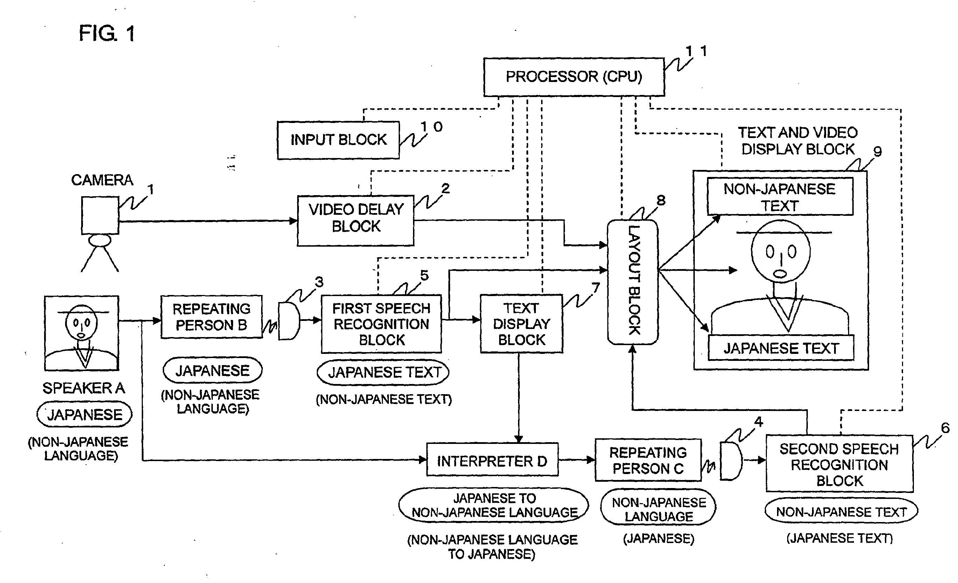

Fig. 1 is a schematic block diagram showing the configuration of an audio video conversion apparatus according to a first embodiment.

The audio video conversion apparatus of the present embodiment is mainly used to aid communication in multilingual conferences such as international conferences, multilateral conferences, and bilateral conferences, meetings, lectures, classes, education, and the like. The audio video conversion apparatus according to the present embodiment includes a camera 1, a video delay block 2, a first speech input block 3, a second speech input block 4, a first speech recognition block 5, a second speech recognition block 6, a text display block 7, a layout block 8, a text and video display block 9. an input block 10, and a processor 11.

The camera 1 takes a picture of the bearing of speaker A. The video delay block 2 delays a video signal sent from the camera 1 by a predetermined delay time and outputs delayed video data. The video delay block 2 provides the video delay time so that the bearing of the speaker can be displayed together with the corresponding text obtained through speech recognition. This helps the user understand the context properly. The video delay time can be adjusted, depending on the speech reading capability of each conference participant such as a hearing-impaired person and the speaking rates and capabilities of speaker A, repeating person B or C, and interpreter D. The video delay block 2 may perform appropriate image processing such as zooming in or out of the picture of speaker A or the like.

The first speech input block 3 includes a microphone and inputs speeches made by a first specified repeating person B who repeats speeches made by speaker A. The second speech input block 4 inputs speeches made by a second specified repeating person C who repeats speeches made by interpreter D who interprets the speeches made by speaker A. If repeating person B or C speaks into a narration microphone of the first speech input block 3 or second speech input block 4 in a quiet place provided in a conference site, ground noise and the effect of the microphone can be eliminated.

The first speech recognition block 5 recognizes and converts the speeches sent from the first speech input block 3 into first visible language data such as textual data and ideographical data. The second speech recognition block 6 recognizes and converts the speeches sent from the second speech input block 4 into second visible language data. In this embodiment, the first speech recognition block 5 receives speeches made in a first language (Japanese, for instance) by first repeating person B who repeats speeches made in the first language by speaker A, and outputs visible language data in the first language (Japanese text, for instance). The second speech recognition block 6 receives speeches made in a second language (non-Japanese language such as English, for instance) by second repeating person C who repeats speeches made in the second language by interpreter D who interprets the speeches made in the first language (Japanese, for instance) by speaker A, and outputs visible language data in the second language (non-Japanese text such as English text, for instance).

The first speech recognition block 5 and/or second speech recognition block 6 may select either or both of the speeches repeated by first repeating person B and the speeches interpreted by interpreter D and repeated by second repeating person C. The first speech recognition block 5 and/or second speech recognition block 6 is configured to recognize speeches made by a repeating person. The first speech recognition block 5 and/or second speech recognition block 6 may include a selector which allows first repeating person B and/or second repeating person C to select a language database stored in the first speech recognition block 5 and/or second speech recognition block 6, depending on the topic of speaker A, the subject of the conference, or the like.

The first speech recognition block 5 and/or second speech recognition block 6 may include a misconversion probability calculation block for calculating the probability of occurrence of wrong conversions from phonetic characters (kana) to kanji and an output determination block for selecting kanji output or kana output, depending on the probability calculated by the misconversion probability calculation block. The first speech recognition block 5 and/or the second speech recognition block 6 can be configured to calculate the probability of misrecognition of a Japanese homonym before starting speech recognition and to select kana display for a homonym having a high probability of misrecognition. First repeating person B and/or second repeating person C may decide to display a word in kana if the word is not stored in the first speech recognition block 5 and/or the second speech recognition block 6.

The text display block 7 visibly displays the visible language data in the first language output from the first speech recognition block 5. Interpreter D may interpret, viewing the first visible language data displayed by the text display block 7.

The layout block 8 receives the first visible language data output as a result of recognition by the first speech recognition block 5, the second visible language data output as a result of recognition by the second speech recognition block 6, and delayed video data of speaker A output by the video delay block 2, and determines a display layout on the text and video display block 9. The processor 11 sets one or more display layout items such as the number of lines per unit time, the number of characters per unit time, the number of characters per line, color, size, and, display position, concerning the first visible language data (textual data) and second visible language data (textual data) and the delayed video data to be displayed on the text and video display block 9. The layout block 8 performs image processing such as zooming in or out for the first visible language data, second visible language data, and delayed video data, as specified by the processor 11, and generates an image to be displayed.

The text and video display block 9 combines and displays the first visible language data output as a result of recognition by the first speech recognition block 5, the second visible language data output as a result of recognition by the second speech recognition block 6, and the delayed video data of speaker A output by the video delay block 2, in accordance with the output specified and generated by the layout block 8.

The input block 10 sets up the first speech recognition block 5, second speech recognition block 6, video delay block 2, layout block 8, and others, and issues a data input instruction to an appropriate database, memory, and the like. The processor 11 is a small computer which controls the first speech recognition block 5, second speech recognition block 6, video delay block 2, input block 10, layout block 8, and others.

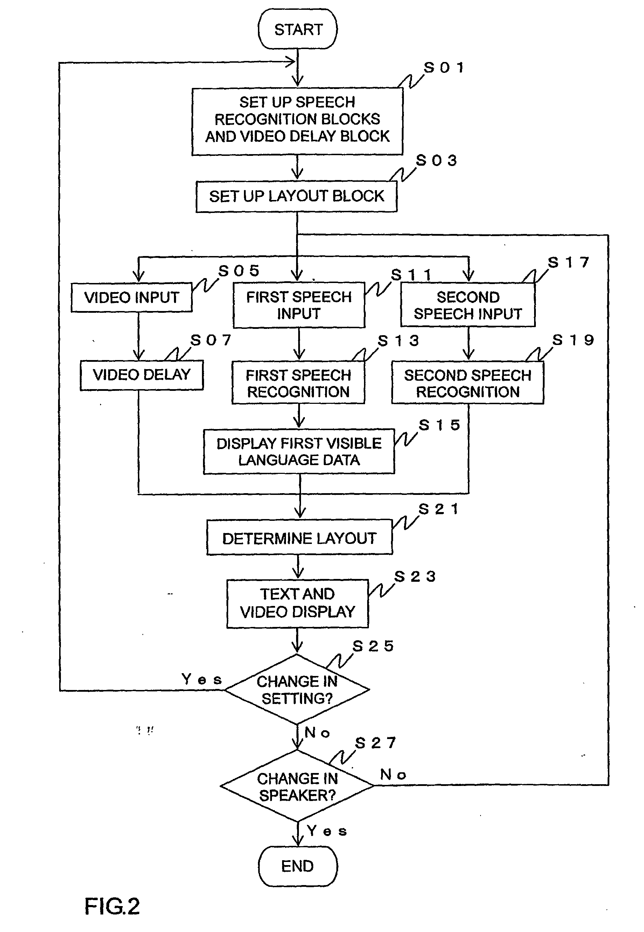

Fig. 2 shows a flowchart of speech conversion performed by the processor in the first embodiment.

The processor 11 sets up the first speech recognition block 5, second speech recognition block 6, and video delay block 2, as instructed by the input block 10 or as predetermined in an appropriate storage block (in step S01). The first speech recognition block 5 and second speech recognition block 6 are set up in regard to items such as a threshold level of misrecognition rate of kanji and a language database to be used. As for the video delay block 2, the delay time of the speaker's picture, for example, is specified or selected. Further, the processor 11 sets up the layout block 8, as instructed by the input block 10 or as predetermined in an appropriate storage block (in step 303). The layout block 8 is set up in regard to the display statuses and layouts of the first visible language data, second visible language data, and delayed video data to be displayed by the text and video display block 9. The items specified for the visible language data include the number of text lines to be presented, the size, font, and color of characters to be presented, and the display positions of the text lines. The items specified for the delayed video data include the size and display position of the speaker's picture. Those items are specified as required.

The camera 1 takes a picture of speaker A (in step S05). The video delay block 2 delays the picture taken by the camera 1 and performs, if necessary, appropriate image processing, and outputs delayed video data (in step S07), as specified and controlled by the processor 11,.

The first speech input block 3 receives the speeches repeated by first repeating person B (in step S11). The first speech recognition block 5 recognizes the speeches repeated in the first language by first repeating person B, received by the first speech input block 3, and converts the speeches into first visible language data (Japanese text, for instance) (in step S13), as specified and controlled by the processor 11. The text display block 7 displays the first visible language data output from the first speech recognition block 5 (in step S15), if necessary.

The second speech input block 4 receives (in step S17) speeches made by second repeating person C who repeats speeches made by interpreter D who interprets the speeches made by the speaker and/or the first visible language data displayed by the text display block 7. The second speech recognition block 6 recognizes the speeches repeated in the second language by second repeating person C, received by the second speech input block 4, and converts the speeches into second visible language data (non-Japanese text, for instance) (in step S19), as specified and controlled by the processor 11.

The layout block 8 receives the first visible language data from the first speech recognition block 5, the second visible language data from the second speech recognition block 6, and the delayed video data from the video delay block 2, determines a display layout for those data, generates an image to be displayed through appropriate image processing, if necessary, and outputs the image (in step S21), as specified and controlled by the processor 11. The text and video display block 9 displays the first visible language data, the second visible language data, and the video delay block 2 (in step S23), in accordance with the output from the layout block 8.

If it is decided to change a setting (in step S25), the processor 11 goes back to step S01 and repeats the processing. If it is not decided to change any setting (in step S25) and if it is found that speaker A continues to serve (in step S27), the processor 11 returns to repeat the processing after step S03. If it is found that speaker A is changed to another person (in step S27), the processor 11 ends the processing and can re-execute the processing.

### 2. Second embodiment

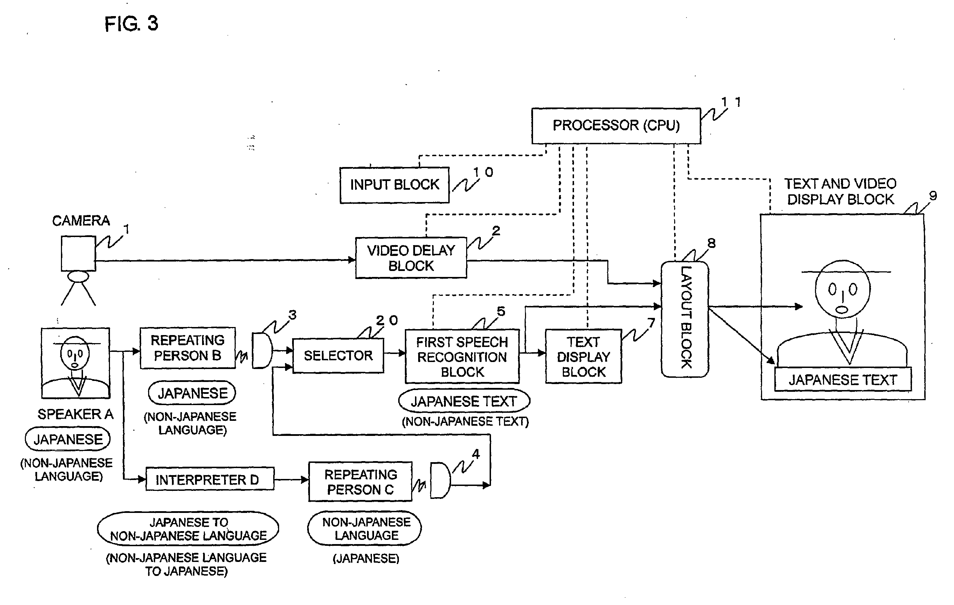

Fig. 3 is a schematic block diagram showing the configuration of an audio video conversion apparatus according to a second embodiment.

The audio video conversion apparatus of the present embodiment is mainly used to aid communication in conferences such as domestic conferences and bilateral conferences, meetings, lectures, classes, education, and the like. The audio video conversion apparatus according to the present embodiment includes a camera 1, a video delay block 2, a first speech input block 3, a second speech input block 4, a first speech recognition block 5, a text display block 7, a layout block 8, a text and video display block 9, an input block 10, a processor 11, and a selector 20.

The second embodiment and the first embodiment are different in that the second speech recognition block is not included and that the selector 20 is added, but are the same in the other configurations and operation. The second speech input block and the selector 20 may be further excluded if unnecessary.

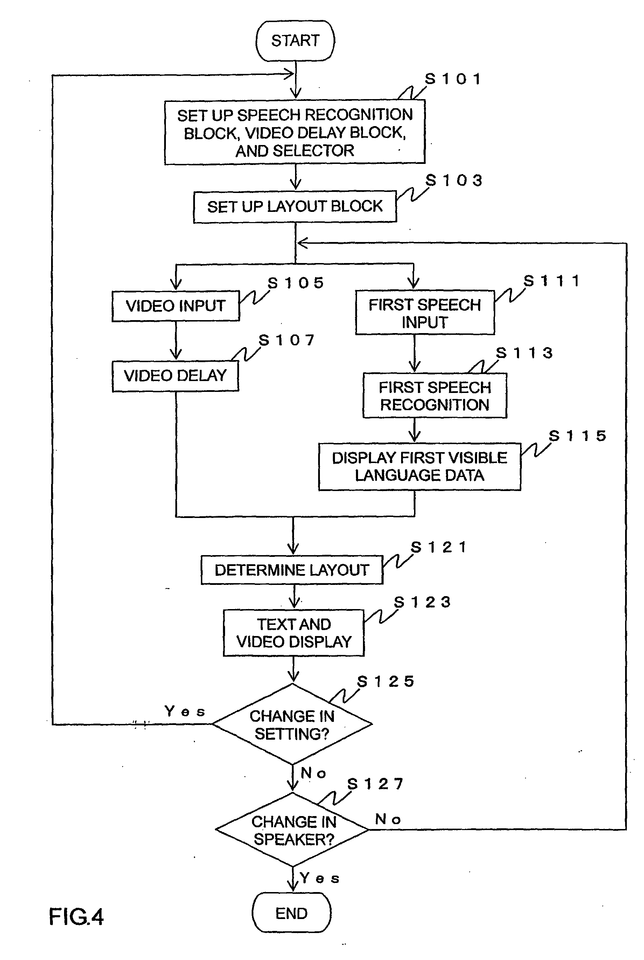

Fig. 4 shows a flowchart of speech conversion performed by the processor in the second embodiment.

The processing of the second embodiment differs from the processing of the first embodiment mainly in that steps S17 to S19 are not included. The first speech input block 3 receives either speeches made by repeating person B who repeats speeches made by the speaker or speeches made by repeating person C who repeats speeches made by interpreter D who interprets the speeches made by the speaker.

The processor 11 sets up the first speech recognition block 5, video delay block 2, and selector 20 (in step S101), as instructed by the input block 10 or as predetermined in an appropriate storage block. If the selector 20 is not included, the setup of the selector 20 is not necessary. The first speech recognition block 5 is set up in respect to a threshold level of misrecognition rate of kanji, language database to be used, and the like. As for the video delay block 2, the delay time of the speaker's picture, for example, is specified or selected. The processor 11 sets up the layout block 8 (in step S103), as instructed by the input block 10 or as predetermined in an appropriate storage block. The layout block 8 is set up in respect to the display statuses and layouts of the first visible language data (Japanese text or non-Japanese text in the present embodiment) and delayed video data both to be displayed by the text and video display block 9. The items specified for the visible language data include the number of text lines to be presented, the size, font, and color of characters, and the display positions of the text lines. The items specified for the delayed video data include the size and display position of the speaker's picture. Those items are specified as required.

The camera 1 takes a picture of speaker A (in step S105). The video delay block 2 delays the picture taken by the camera 1 and performs, if necessary, image processing, and outputs delayed video data (in step S107), as specified and controlled by the processor 11.

The first speech input block 3 receives speeches made by first repeating person B or second repeating person C (in step S111). The first speech recognition block 5 recognizes the speeches made in a first language (Japanese or a non-Japanese language in the present embodiment) by first repeating person B or second repeating person C, received by the first speech input block 3, and converts the speeches into first visible language data (Japanese or non-Japanese text in the present embodiment) (in step S113), as specified and controlled by the processor 11. The text display block 7 displays the first visible language data output from the first speech recognition block 5 (in step S115), if necessary.

The layout block 8 receives the first visible language data from the first speech recognition block 5 and the delayed video data from the video delay block 2, determines a display layout for those data, generates an image to be displayed, if necessary, by performing appropriate image processing, and outputs the image (in step S121), as specified and controlled by the processor 11. The text and video display block 9 appropriately displays the first visible language data and delayed video data (in step S123), in accordance with the output from the layout block 8.

If it is decided to change a setting (in step S125), the processor 11 goes back to step S101 and repeats the processing. If it is not decided to change any setting and if it is found that speaker A continues to serve (in step S127), the processor 11 returns to perform the processing after step S103. If it is found that speaker A is changed to another person, the processor 11 ends the processing and can re-execute the processing.

### 3. Third embodiment

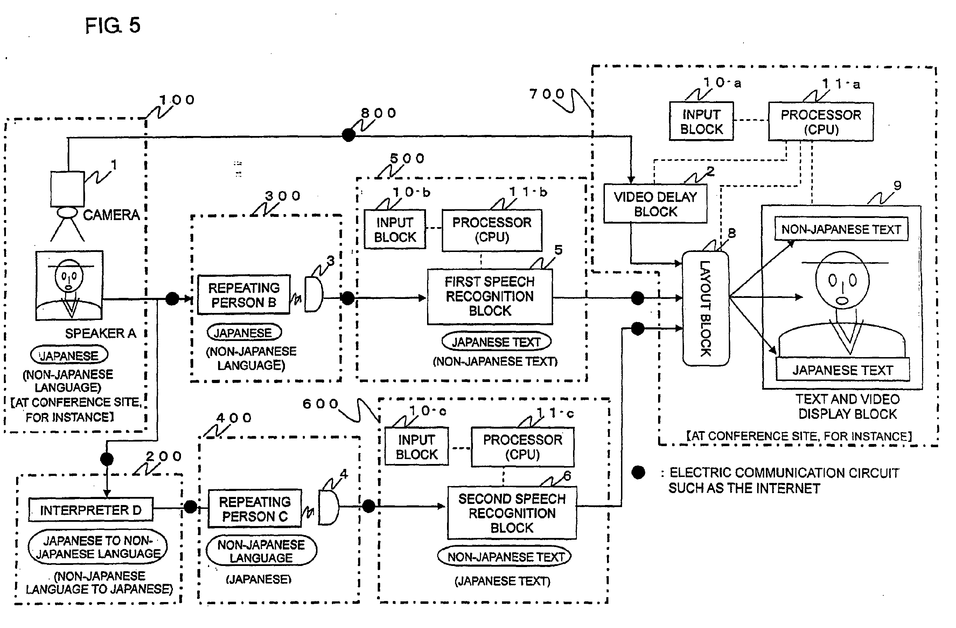

Fig. 5 is a schematic block diagram showing the configuration of an audio video conversion apparatus according to a third embodiment.

The audio video conversion apparatus of the present embodiment is used to aid a speaker and the user in communication across the border between different linguistic systems, by converting the speech information of a speaker into textual information, with the intervention of a third party such as a repeating person, and providing the linguistic information and non-linguistic information of the speaker through electric communication circuits.

In the same way as in the first embodiment, the audio video conversion apparatus according to the present embodiment is used to aid communication in multilingual conferences such as international conferences, multilateral conferences, and bilateral conferences, meetings, lectures, classes, education, and the like. The audio video conversion apparatus of the present embodiment includes a speaker unit 100, an interpreter unit 200, a first repeating-person unit 300, a second repeating-person unit 400, a first recognition unit 500, a second recognition unit 600, a display unit 700, and electric communication circuits 800.

The speaker unit 100 includes a camera 1 and, if necessary, a microphone. The interpreter unit 200 includes a handset and a microphone. The first repeating-person unit 300 contains a first speech input block 3 and a handset, and the second repeating-person unit 400 contains a second speech input block 4 and a handset. The first recognition unit 500 includes a first speech recognition block 5, an input block 10-b, and a processor 11-b, and the second recognition unit 600 includes a second speech recognition block 6, an input block 10-c, and a processor 11-c. The display unit 700 includes a video delay block 2, a text display block 7, a layout block 8, a text and video display block 9, an input block 10-c, and a processor 11-c. Black circles in the figure represent electric communication circuits 800, where electric communication channels such as the Internet, a LAN, a wireless LAN, a mobile phone, a PDA, and others, and input-and-output interfaces between the electric communication channels and the corresponding units 100 to 700 are provided. The speaker unit 100, interpreter unit 200, first repeating-person unit 300, second repeating-person unit 400, first recognition unit 500, second recognition unit 600, and display unit 700 are connected by the electric communication circuits 800 as needed, so that an audio signal and/or a video signal can be exchanged. The units may be connected directly by wire or by radio, not through any of the electric communication circuits 800. With the electric communication circuits 800, containing the electric communication channels and interfaces, speaker A, interpreter D, first repeating person B, second repeating person C, the first recognition unit 500, the second recognition unit 600, and the display unit 700 placed in a conference site or the like can be located anywhere and arranged appropriately.

The camera 1, video delay block 2, first speech input block 3, second speech input block 4, first speech recognition block 5, text display block 7, layout block 8, text and video display block 9, input block 10-a, input block 10-b, input block 10-c, processor 11-a, processor 11-b, and processor 11-c are configured and operate in the same way as the components having the same reference numerals in the first embodiment.

The input block 10-a sets up the video delay block 2, the layout block 8, and others, and issues a data input instruction to an appropriate database, memory, or the like. The processor -a is a small computer which controls the video delay block 2, input block 10-a, input block 10-b, input block 10-c, layout block 8, and others. The input block 10-b and input block 10-c set up the first speech recognition block 5 and the second speech recognition block 6 respectively, and issue a data input instruction to an appropriate database, memory; or the like. The processor 11-b is a small computer which controls the first speech recognition block 5 and others, and the processor 11-c is a small computer which controls the second speech recognition block 6 and others.

A flowchart of speech conversion in the third embodiment is the same as the flowchart in the first embodiment. The audio video conversion apparatus operates as described above.

### 4. Fourth embodiment

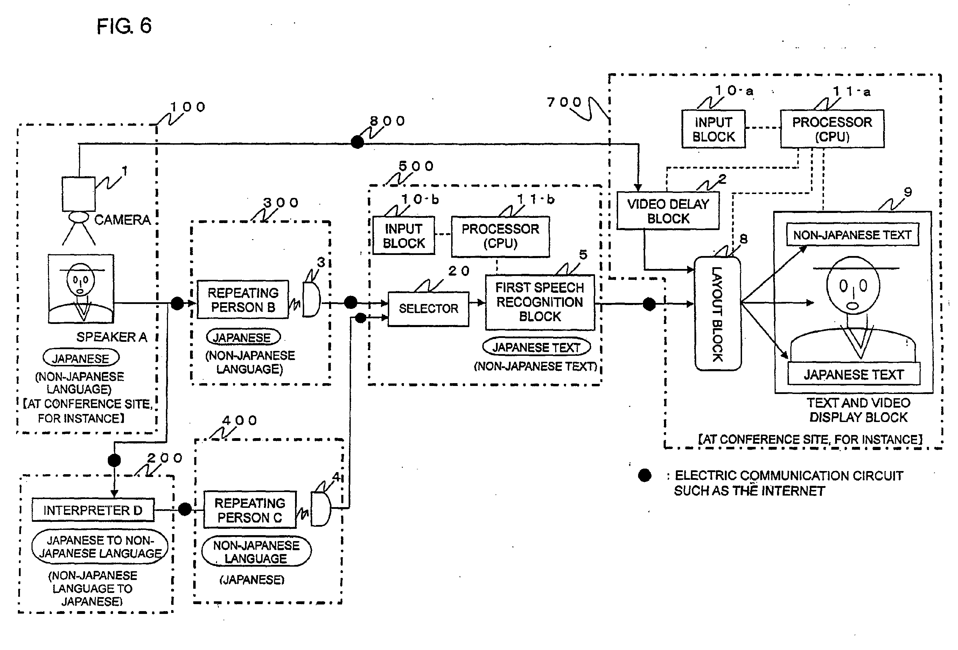

Fig. 6 is a schematic block diagram showing the configuration of an audio video conversion apparatus according to a fourth embodiment.

The audio video conversion apparatus of the present embodiment is used to aid a speaker and the user in communication across the border between different linguistic systems, by converting the speech information of the speaker into textual information, with the intervention of a third party such as a repeating person, and providing the linguistic information and non-linguistic information of the speaker through electric communication circuits.

In the same way as in the third embodiment, the audio video conversion apparatus according to the present embodiment is used to aid communication in multilingual conferences such as international conferences, multilateral conferences, and bilateral conferences, meetings, lectures, classes, education, and the like. The audio video conversion apparatus of the present embodiment includes a speaker unit 100, an interpreter unit 200, a first repeating-person unit 300, a second repeating-person unit 400, a first recognition unit 500, a display unit 700, and electric communication circuits 800.

The fourth embodiment and the third embodiment are different in that the second recognition unit 600 containing the second speech recognition block is not included and that a selector 20 is included in the first recognition unit 500, but are the same in the other configurations and operation. The configuration and operation of the selector 20 are the same as those in the second embodiment. The second speech input block and the selector 20 may be further excluded if unnecessary.

A flowchart of speech conversion in the fourth embodiment is the same as the flowchart in the third embodiment. The audio video conversion apparatus operates as described above.

### 5. Conclusion

As described above, the speech recognition unit in the present embodiment uses a speech database storing in advance speeches made by a repeating person. The speech recognition unit performs speech conversion when speeches made by the repeating person who repeats speeches made by speaker A are received. Accordingly, a high recognition rate can be obtained no matter who speaker A is. If speaker A is interpreter D, the repeating person repeats speeches made by interpreter D, so that speeches made in a non-Japanese language can be interpreted into Japanese with a high recognition rate. If the original speeches are made in Japanese, interpreter D interprets the speeches into a non-Japanese language, and the non-Japanese speeches are repeated in the non-Japanese language, so that the speeches made in Japanese can be interpreted into the non-Japanese language with a high recognition rate. Because a question made by another person can also be converted into text and displayed, the audio video conversion apparatus can implement bidirectional aid in conferences. The audio video conversion apparatus can be used as communication aid in international conferences as well as in domestic conferences.

The audio video conversion apparatus of the present embodiment takes a picture of speaker A, and delays and displays the picture, together with the corresponding text obtained as a result of speech recognition. Accordingly, the movement of the lips and facial expressions of speaker A, sign language, and other visual information can be used to understand the context. The video delay time of the video delay block 2 can be adjusted, depending on the speech reading capability of each hearing-impaired person. A hearing-impaired person skilled in lip reading can correct 5% of errors in speech recognition, by using his or her high speech reading capability.

A text and video conversion method, a text and video conversion apparatus, or a text and video conversion system according to the present invention can be provided as a text and video conversion program for making a computer execute each step, a recording medium readable by a computer having stored thereon the text and video conversion program, a program product including the text and video conversion program that can be loaded into the internal memory of a computer, or a server or a computer including the program.

### Industrial Applicability

According to the present invention, as described above, an audio video conversion apparatus, an audio video conversion method, and an audio video conversion program are provided which help hearing-impaired people and others understand speeches made by an arbitrary speaker, by converting the speeches made by the speaker into text, with the intervention of a repeating person who repeats the speeches and a speech recognition unit, and by displaying the corresponding facial expressions of the speaker and other visual information on a screen after a delay, together with the corresponding text.

Further, according to the present invention, an audio video conversion apparatus, an audio video conversion method, and an audio video conversion program are provided which render aid to hearing-impaired people attending in international conferences, multilateral or bilateral conferences and other meetings, by entering speeches made by a repeating person who repeats speeches made by a lecturer or an interpreter into a speech recognition unit and by displaying text obtained as a result of speech recognition, together with the corresponding picture of the lecturer on a screen.

Moreover, according to the present invention, international conferences where different languages are used can be interpreted; the contents of those conferences can be immediately printed (compensation for information); aid can be rendered to hearing-impaired people and others attending in conferences and lectures; and the user can be given textual information after speeches are transferred to a repeating person by telephone. Further, according to the present invention, an audio video conversion apparatus, an audio video conversion method, and an audio video conversion program are provided which help the user communicate with a speaker across the border between different linguistic systems.

According to the present invention, the system described above can become available to the user wherever he or she is, by adding a means for transferring speeches made by a speaker and an image thereof to an interpreter, a repeating person, or a correcting person working at home or at a remote place by means of an electric communication circuit which allows communication through an electric communication channel such as the Internet. Further, according to the present invention, a repeating person and an interpreter can conduct home-based business by using this system, and an impaired person who is hard to go out from home can work as a repeating person at home.

## Claims

1. An audio video conversion apparatus comprising:
a camera for taking a picture of facial expressions of a speaker;
a video delay block for delaying a video signal of the picture taken by the camera, by a predetermined delay time and for outputting delayed video data;
a first speech input block for receiving speeches made in a first language by a first repeating person who repeats speeches made in the first language by the speaker;
a second speech input block for receiving speeches made in a second language by a second repeating person who repeats speeches made in the second language by an interpreter who interprets the speeches made in the first language by the speaker;
a first speech recognition block for recognizing and converting the speeches made in the first language sent from the first speech input block, into first visible language data, and for outputting the data; and a second speech recognition block for recognizing and converting the speeches made in the second language sent from the second speech input block, into second visible language data, and for outputting the data;
a layout block for receiving the first visible language data output from the first speech recognition block, the second visible language data output from the second speech recognition block, and the delayed video data of the speaker delayed by the video delay block, for determining a display state, and for generating an image to be displayed in which those data have been synchronized or approximately synchronized;
a text and video display block for displaying the image to be displayed in which the first visible language data, the second visible language data, and the delayed video data have been synchronized or approximately synchronized, in accordance with the output from the layout block;
an input block for setting up one or more of the first speech recognition block, the second speech recognition block, the video delay block, and the layout block; and
a processor for controlling the first speech recognition block, the second speech recognition block, the video delay block, the input block, and the layout block.

2. An audio video conversion apparatus comprising:
a camera for taking a picture of facial expressions of a speaker;
a video delay block for delaying a video signal of the picture taken by the camera, by a predetermined delay time and for outputting delayed video data;
a first speech input block for receiving speeches made in a first language by a first repeating person who repeats speeches made in the first language by the speaker or an interpreter;
a first speech recognition block for recognizing and converting the speeches made in the first language, sent from the first speech input block, into first visible language data, and for outputting the data;
a layout block for receiving the first visible language data output from the first speech recognition block, and the delayed video data of the speaker delayed by the video delay block, for determining a display state, and for generating an image to be displayed in which those data have been synchronized or approximately synchronized;
a text and video display block for displaying the image to be displayed in which the first visible language data and the delayed video data have been synchronized or approximately synchronized, in accordance with the output from the layout block;
an input block for setting up one or more of the first speech recognition block, the video delay block, and the layout block; and
a processor for controlling the first speech recognition block, the video delay block, the input block, and the layout block.

3. An audio video conversion apparatus according to Claim 1 or 2, wherein the first speech recognition block and/or the second speech recognition block further comprises a selector for selecting a specific language database from a plurality of language databases provided for speech recognition, depending on the topic of the speaker or the subject of a conference.

4. An audio video conversion apparatus according to Claim 1 or 2, wherein the first speech recognition block and/or the second speech recognition block further comprises:
a misconversion probability calculation block for calculating the probability of occurrence of wrong kana-to-kanji conversions; and
an output determination block for selecting kanji output or kana output, depending on the probability calculated by the misconversion probability calculation block.

5. An audio video conversion apparatus according to Claim 1 or 2, wherein the first speech recognition block and/or the second speech recognition block displays a word in kana according to a predetermined setting if kanji for the word is not contained in the language database.

6. An audio video conversion apparatus according to Claim 1 or 2, further comprising a text display block for visibly displaying the visible language data in the first language, output from the first speech recognition block.

7. An audio video conversion apparatus according to Claim 1 or 2, wherein the layout block specifies any of the number of lines per unit time, the number of characters per unit time, the number of characters per line, a color, a size, a display position, and another display format, concerning the visible language data and the delayed video data both to be displayed by the text and video display block, performs image processing of the visible language data and the delayed video data accordingly, and generates an image to be displayed.

8. An audio video conversion method for converting speeches made by a speaker into visible language data and displaying the language data together with image data of the speaker, the audio video conversion method comprising:
a step in which a processor sets up a first speech recognition block, a second speech recognition block, and a video delay block, as instructed by an input block or as predetermined in an appropriate storage block;
a step in which the processor sets up a layout block, as instructed by the input block or as predetermined in an appropriate storage block;
a step in which a camera takes a picture of the speaker;
a step in which the video delay block decays the picture taken by the camera and performs, if necessary, appropriate image processing, and outputs delayed video data, as specified and controlled by the processor;
a step in which a first speech input block receives speeches made in a first language by a first repeating person who repeats speeches made in the first language by the speaker;
a step in which the first speech recognition block recognizes the speeches made in the first language by the first repeating person, received by the first speech input block, and converts the speeches into first visible language data;
a step in which a second speech input block receives speeches made in a second language by a second repeating person who repeats speeches made in the second language by an interpreter who interprets the speeches made in the first language by the speaker;
a step in which the second speech recognition block recognizes the speeches made in the second language by the second repeating person, received by the second speech input block, and converts the speeches into second visible language data;
a step in which the layout block receives the first language data from the first speech recognition block, the second language data from the second speech recognition block, and the delayed video data from the video delay block, determines a display layout of those data, generates an image to be displayed in which those data have been synchronized or approximately synchronized by image processing, and outputs the image, as specified and controlled by the processor; and
a step in which a text and video display block displays the image to be displayed in which the first language data, the second language data, and the delayed video data have been synchronized or approximately synchronized, in accordance with the output from the layout block.

9. An audio video conversion method for converting speeches made by a speaker into visible language data and displaying the language data together with image data of the speaker, the audio video conversion method comprising:
a step in which a processor sets up a first speech recognition block and a video delay block, as instructed by an input block or as predetermined in an appropriate storage block;
a step in which the processor sets up a layout block, as instructed by the input block or as predetermined in an appropriate storage block;
a step in which a camera takes a picture of the speaker;
a step in which the video delay block delays the picture taken by the camera and performs, if necessary, appropriate image processing, and outputs delayed video data, as specified and controlled by the processor;
a step in which a first speech input block receives speeches made in a first language by a first repeating person who repeats speeches made in the first language by the speaker or an interpreter;
a step in which the first speech recognition block recognizes the speeches made in the first language by the first repeating person, received by the first speech input block, and converts the speeches into first visible language data;
a step in which the layout block receives the first language data from the first speech recognition block and the delayed video data from the video delay block, determines a display layout of those data, generates an image to be displayed in which those data have been synchronized or approximately synchronized by image processing, and outputs the image, as specified and controlled by the processor; and
a step in which a text and video display block displays the image to be displayed in which the first language data and the delayed video data have been synchronized or approximately synchronized, in accordance with the output from the layout block.

10. An audio video conversion method according to Claim 8 or 9, wherein one or more of the number of text lines to be presented, the size, font, and color of characters to be presented, the display positions of the text lines, and the like are specified for the visible language data; and one or more of the size, display position, and the like of the speaker's picture are specified for the delayed video data; in the step of setting up the layout block.

11. An audio video conversion method according to Claim 8 or 9, further comprising a step in which a text display block displays the first visible language data output from the first speech recognition block.

12. An audio video conversion program for converting speeches made by a speaker into visible language data and displaying the language data together with image data of the speaker, the audio video conversion program making a computer execute:
a step in which a processor sets up a first speech recognition block, a second speech recognition block, and a video delay block, as instructed by an input block or as predetermined in an appropriate storage block;
a step in which the processor sets up a layout block, as instructed by the input block or as predetermined in an appropriate storage block;
a step in which a camera takes a picture of the speaker;
a step in which the video delay block delays the picture taken by the camera and performs, if necessary, appropriate image processing, and outputs delayed video data, as specified and controlled by the processor;
a step in which a first speech input block receives speeches made in a first language by a first repeating person who repeats speeches made in the first language by the speaker;
a step in which the first speech recognition block recognizes the speeches made in the first language by the first repeating person, received by the first speech input block, and converts the speeches into first visible language data;
a step in which a second speech input block receives speeches made in a second language by a second repeating person who repeats speeches made in the second language by an interpreter who interprets the speeches made in the first language by the speaker;
a step in which the second speech recognition block recognizes the speeches made in the second language by the second repeating person, received by the second speech input block, and converts the speeches into second visible language data;
a step in which the layout block receives the first language data from the first speech recognition block, the second language data from the second speech recognition block, and the delayed video data from the video delay block, determines a display layout of those data, generates an image to be displayed in which those data have been synchronized or approximately synchronized by image processing, and outputs the image, as specified and controlled by the processor; and
a step in which a text and video display block displays the image to be displayed in which the first language data, the second language data, and the delayed video data have been synchronized or approximately synchronized, in accordance with the output from the layout block.

13. An audio video conversion program for converting speeches made by a speaker into visible language data and displaying the language data together with image data of the speaker, the audio video conversion program making a computer execute:
a step in which a processor sets up a first speech recognition block and a video delay block, as instructed by an input block or as predetermined in an appropriate storage block;
a step in which the processor sets up a layout block, as instructed by the input block or as predetermined in an appropriate storage block;
a step in which a camera takes a picture of the speaker;
a step in which the video delay block delays the picture taken by the camera and performs, if necessary, appropriate image processing, and outputs delayed video data, as specified and controlled by the processor,;
a step in which a first speech input block receives speeches made in a first language by a first repeating person who repeats speeches made in the first language by the speaker or an interpreter;
a step in which the first speech recognition block recognizes the speeches made in the first language by the first repeating person, received by the first speech input block, and converts the speeches into first visible language data;
a step in which the layout block receives the first language data from the first speech recognition block and the delayed video data from the video delay block, determines a display layout of those data, generates an image to be displayed in which those data have been synchronized or approximately synchronized by image processing, and outputs the image, as specified and controlled by the processor; and
a step in which a text and video display block displays the image to be displayed in which the first language data and the delayed video data have been synchronized or approximately synchronized, in accordance with the output from the layout block.

14. An audio video conversion apparatus comprising:
a first recognition unit comprising a first speech recognition block for recognizing speeches made in a first language by a first repeating person who repeats speeches made in the first language by a speaker and converting the speeches into first visible language data; a first input block for setting up the first speech recognition block; and a first processor for controlling the first speech recognition block and the first input block;
a second recognition unit comprising a second speech recognition block for recognizing speeches made in a second language by a second repeating person who repeats speeches made in the second language by an interpreter who interprets the speeches made in the first language by the speaker, and converting the speeches into second visible language data; a second input block for setting up the second speech recognition block; and a second processor for controlling the second speech recognition block and the second input block: and
a display unit for receiving outputs from the first recognition unit and the second recognition unit, and displaying text and an image,
the display unit comprising:
a video delay block for delaying the signal of a picture taken by a camera by a predetermined delay time and outputting delayed video data;
a layout block for receiving the first visible language data from the first recognition unit, the second visible language data from the second recognition unit, and the delayed video data of the speaker delayed by the video delay block, determining a display state, and generating an image to be displayed in which those data have been synchronized or approximately synchronized;
a text and video display block for displaying the image to be displayed, output from the layout block;
a third input block for setting up the video delay block and the layout block; and
a third processor for controlling the video delay block, the third input block, and the layout block.

15. An audio video conversion apparatus comprising:
a first recognition unit comprising a first speech recognition block for recognizing speeches made in a first language by a first repeating person who repeats speeches made in the first language by a speaker or an interpreter, and converting the speeches into first visible language data; a first input block for setting up the first speech recognition block; and a first processor for controlling the first speech recognition block and the first input block; and
a display unit for receiving an output from the first recognition unit and displaying text and an image,
the display unit comprising:
a video delay block for delaying the signal of a picture taken by a camera by a predetermined delay time, and outputting delayed video data;
a layout block for receiving the first visible language data from the first recognition unit and the delayed video data of the speaker delayed by the video delay block, determining a display state, and generating an image to be displayed in which those data have been synchronized or approximately synchronized;
a text and video display block for displaying the image to be displayed, output from the layout block;
a third input block for setting up the video delay block and the layout block; and
a third processor for controlling the video delay block, the third input block, and the layout block.

16. An audio video conversion apparatus according to Claim 14 or 15, further comprising a speaker unit,
the speaker unit comprising:
a camera for taking a picture of facial expressions of the speaker;
an input block for receiving speeches made by the speaker; and
an interface for allowing communications through an electronic communication channel, and
the speaker unit outputting an audio signal and a video signal through the electric communication channel and the interface.

17. An audio video conversion apparatus according to Claim 14 or 15, further comprising a first repeating-person unit,
the first repeating-person unit comprising:
a first speech input block for receiving the speeches made in the first language by the first repeating person who repeats speeches made in the first language by the speaker; and
an interface for allowing communications through an electric communication channel, and
the first repeating-person unit outputting an audio signal through the electric communication channel and the interface to the first recognition unit.

18. An audio video conversion apparatus according to Claim 14 or 15, further comprising a second repeating-person unit,
the second repeating-person unit comprising:
a second speech input block for receiving the speeches made in the second language by the second repeating person who repeats the speeches made in the second language by the interpreter who interprets the speeches made in the first language by the speaker; and
an interface for allowing communications through an electric communication channel, and
the second repeating-person unit outputting an audio signal through the electric communication channel and the interface to the second recognition unit.

19. An audio video conversion apparatus according to Claim 14 or 15, wherein each of the first recognition unit, the second recognition unit, and the display unit, has an interface for allowing communications through an electric communication channel; and
the outputs of the first recognition unit and the second recognition unit are transferred via an electric communication channel and the interface to the display unit.

20. An audio video conversion apparatus according to Claim 14 or 15, wherein the layout block specifies any of the number of lines per unit time, the number of characters per unit time, the number of characters per line, a color, a size, and a display position, and another display format, concerning the visible language data and the delayed video data both to be displayed by the text and video display block; performs image processing of the visible language data and the delayed video data accordingly; and generates an image to be displayed.

21. An audio video conversion method for converting speeches made by a speaker into visible language data and displaying the language data together with image data of the speaker, the audio video conversion method comprising:
a step in which a first processor, a second processor, and a third processor set up a first recognition block, a second recognition block, and a video delay block, as instructed by a first input block, a second input block, and a third input block respectively or as predetermined in an appropriate storage block;
a step in which the third processor sets up a layout block, as instructed by the third input block or as predetermined in an appropriate storage block;
a step in which the video delay block delays a picture of the speaker taken by a camera and performs, if necessary, appropriate image processing, and outputs delayed video data, as specified and controlled by the third processor;
a step in which the first speech recognition block recognizes speeches made in a first language by a first repeating person who repeats speeches made in the first language by the speaker, and converts the speeches into first visible language data;
a step in which the second speech recognition block recognizes speeches made in a second language by a second repeating person who repeats speeches made in the second language by an interpreter who interprets the speeches made in the first language by the speaker, and converts the speeches into second visible language data;
a step in which the layout block receives the first visible language data from the first speech recognition block, the second visible language data from the second speech recognition block, and the delayed video data from the video delay block, determines a display layout of those data, generates an image to be displayed in which those data have been synchronized or approximately synchronized by image processing, and outputs the image, as specified and controlled by the third processor; and
a step in which a text and video display block displays the image to be displayed in which the first visible language data, the second visible language data, and the delayed video data have been synchronized or approximately synchronized, in accordance with the output from the layout block.

22. An audio video conversion method for converting speeches made by a speaker into visible language data and displaying the language data together with image data of the speaker, the audio video conversion method comprising:
a step in which a first processor and a third processor set up a first speech recognition block and a video delay block, as instructed by a first input block and a third input block respectively or as predetermined in an appropriate storage block;
a step in which the third processor sets up a layout block, as instructed by the third input block or as predetermined in an appropriate storage block;
a step in which the video delay block delays a picture of the speaker taken by a camera and performs, if necessary, image processing, and outputs delayed video data, as specified and controlled by the third processor;
a step in which the first speech recognition block recognizes speeches made in a first language by a first repeating person who repeats the speeches made in the first language by the speaker or an interpreter, and converts the speeches into first visible language data;
a step in which the layout block receives the first language data from the first speech recognition block and the delayed video data from the video delay block, determines a display layout of those data, generates an image to be displayed in which those data have been synchronized or approximately synchronized by image processing, and outputs the image, as specified and controlled by the third processor; and
a step in which a text and video display block displays the image to be displayed in which the first visible language data and the delayed video data have been synchronized or approximately synchronized, in accordance with the output from the layout block.

23. An audio video conversion method according to Claim 8 or 9, wherein one or more of the number of text lines to be presented, the size, font, and color of characters to be presented, the display positions of the text lines, and the like are specified for the visible language data; and one or more of the size, display position, and the like of the speaker's picture are specified for the delayed video data; in the step of setting up the layout block.

24. An audio video conversion method according to Claim 8 or 9, further comprising a step of transferring the speeches made in the first language by the speaker and the speaker's picture taken by the camera, through an electric communication circuit.

25. An audio video conversion method according to Claim 8 or 9, further comprising a step of transferring one or more of the speeches made in the first language by the first repeating person, the speeches made in the second language by the second repeating person, and the speeches made in the second language by the interpreter, through an electric communication circuit.

26. An audio video conversion method according to Claim 8 or 9, further comprising a step of inputting the first visible language data and/or the second visible language data output from the first speech recognition unit and/or the second speech recognition unit, through an electric communication circuit.
